(19) Europäisches Patentamt
European Patent Office
Office européen des brevets

(11) **EP 3 660 065 B1**

(12) **EUROPÄISCHE PATENTSCHRIFT**

(45) Veröffentlichungstag und Bekanntmachung des Hinweises auf die Patenterteilung:
**04.08.2021 Patentblatt 2021/31**

(21) Anmeldenummer: **19211299.3**

(22) Anmeldetag: **25.11.2019**

(51) Int Cl.:
***C08G 18/48*** *(2006.01)* ***C08G 18/76*** *(2006.01)*
***C08G 18/42*** *(2006.01)* ***C08G 79/04*** *(2006.01)*
***C09K 21/14*** *(2006.01)* ***C08K 5/521*** *(2006.01)*
***C08L 75/06*** *(2006.01)* ***C08L 75/08*** *(2006.01)*

(54) **ZUBEREITUNGEN MIT VERBESSERTER WIRKSAMKEIT ALS FLAMMSCHUTZMITTEL**

COMPOSITIONS WITH ENHANCED EFFICACY AS FLAME RETARDANTS

PRÉPARATIONS À EFFICACITÉ AMÉLIORÉE EN TANT QU'AGENT RETARDATEUR DE FLAMMES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2018 EP 18208789**

(43) Veröffentlichungstag der Anmeldung:
**03.06.2020 Patentblatt 2020/23**

(73) Patentinhaber: **LANXESS Deutschland GmbH**
**50569 Köln (DE)**

(72) Erfinder:
- **HANSEL, Herr Jan-Gerd**
  **51469 Bergisch Gladbach (DE)**
- **TEBBE, Heiko**
  **41539 Dormagen (DE)**

(56) Entgegenhaltungen:
**EP-A1- 0 771 810** **EP-A1- 3 388 479**
**WO-A1-2007/118089** **US-B2- 7 772 303**

EP 3 660 065 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft Zubereitungen mit verbesserter Wirksamkeit als Flammschutzmittel, deren Verwendung, sowie Polyurethane, die die erfindungsgemäßen Flammschutzmittel-Zubereitungen enthalten.

Polyurethan-Kunststoffe werden in vielen Bereichen, wie Möbel, Matratzen, Transport, Elektro, Bau und technische Dämmung als Werkstoffe eingesetzt. Man unterscheidet massive Polyurethane, wie z. B. thermoplastische Polyurethane, von Polyurethanschaumstoffen. Polyurethanschaumstoffe sind poröse Materialien, die aus Polyisocyanaten hergestellt werden, indem diese in Gegenwart von Treibmitteln mit Polyolen umgesetzt werden und dabei einen Schaumstoff bilden, der durch eine duroplastische Polymerstruktur dauerhaft stabilisiert wird. Es sind viele verschiedene Typen von Polyisocyanaten und Polyolen bekannt, die es erlauben, durch die Wahl der Rohstoffe diverse Schaumstoffarten mit unterschiedlichen Eigenschaften herzustellen.

Zum Erreichen hoher Flammschutzanforderungen, wie sie für Materialien u. a. für die Automobil-, Bahn- und Flugzeuginnenausstattung sowie die Bauisolierung gefordert sind, müssen Polyurethane in der Regel mit Flammschutzmitteln ausgerüstet werden. Hierzu ist eine Vielzahl unterschiedlicher Flammschutzmittel bekannt, die während der Synthese oder der Verarbeitung des Polyurethans eingesetzt werden. Unter der Wirksamkeit eines Flammschutzmittels, die für kommerzielle Anwendungen ein entscheidendes Kriterium ist, wird im Rahmen der vorliegenden Erfindung die Menge Flammschutzmittel bezogen auf eine standardisierte Rezeptur verstanden, die notwendig ist, um einen definierten Brandtest zu bestehen.

Flammschutzmittel müssen neben der gewünschten Wirksamkeit etliche weitere Eigenschaften aufweisen, um erfolgreich eingesetzt werden zu können. Beispielsweise sollen sie mit verschiedenen, zur Herstellung von Polyurethanen eingesetzten Rohstofftypen verträglich sein und sich mit diesen zu fehlerfreien Endprodukten verarbeiten lassen. Zur Herstellung von Polyurethanen werden flüssige Rohstoffe bevorzugt, die eine einfache Logistik und gute Dosierbarkeit ermöglichen. In diesem Zusammenhang ist eine geeignete Viskosität, beispielsweise von 20 mPa·s bis 1000 mPa·s bei 23°C, besonders erwünscht.

Außerdem sollen die Rohstoffe zur Polyurethan-Herstellung im fertigen Polyurethan wenig Emissionen oder Fogging verursachen. Unter Emissionen versteht man unerwünschte, flüchtige Bestandteile, die aus Kunststoffartikeln unter Gebrauchsbedingungen frei gesetzt werden. Diese Erscheinung kann nach der Prüfvorschrift VDA 278 quantitativ beurteilt werden. Unter Fogging versteht man die unerwünschte Kondensation von verdampften flüchtigen Bestandteilen aus der Kraftfahrzeug-Innenausstattung an Glasscheiben, insbesondere an der Windschutzscheibe. Diese Erscheinung kann nach DIN 75 201 quantitativ beurteilt werden.

In zunehmendem Maße wird von Flammschutzmitteln weiterhin gefordert, dass sie eine möglichst geringe Gefährdung für Mensch und Umwelt darstellen. Als problematisch werden beispielsweise Organohalogenverbindungen oder Arylphosphate angesehen. Vor diesem Hintergrund werden in verbrauchernahen Anwendungen Flammschutzmittel bevorzugt, die auf halogenbasierte oder arylphosphathaltige Stoffe verzichten.

Unter den vielen Substanzen, die als Flammschutzmittel für Polyurethanschaumstoffe vorgeschlagen wurden, sind die Poly(alkylenphosphate) durch ein günstiges Eigenschaftsprofil gekennzeichnet. Als Poly(alkylenphosphat) wird im Allgemeinen eine Mischung von Substanzen der Formel (I)

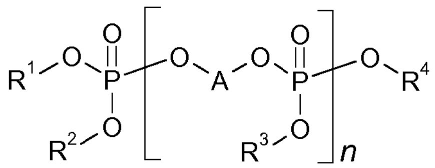

(I),

bezeichnet, in der $R^1$ bis $R^4$ für Alkylreste stehen, A für einen optional Heteroatome enthaltenden Alkylenrest steht und n für eine Zahl zwischen 0 und 100 steht. Entsprechend dieser Definition enthalten die im Zusammenhang mit der vorliegenden Erfindung stehenden Poly(alkylenphosphate) keine freien Hydroxylgruppen. Hydroxylgruppenhaltige Poly(alkylenphosphate) sind dem Fachmann ebenfalls bekannt, haben aber den Nachteil, dass sie aufgrund ihrer Reaktivität gegenüber Isocyanaten die empfindliche Chemie der Polyurethansynthese stören können und daher oft schwierig in der Verarbeitung sind.

Bei Poly(alkylenphosphaten) handelt es sich um Oligomere oder Polymere, die eine Molmassenverteilung aufweisen. Die Mischung von Substanzen der Formel (I) ist also dadurch gekennzeichnet, dass sie verschiedene individuelle Substanzen der Formel (I) enthält, die sich im Wesentlichen in der Anzahl *n* der Repetiereinheiten voneinander unterscheiden. Es ist daher zweckmäßig, ein Poly(alkylenphosphat) mit bestimmter Molmassenverteilung durch den gewichteten Mittelwert der Anzahl der Repetiereinheiten $\overline{n}$ zu charakterisieren. Aus $\overline{n}$ kann die zahlenmittlere Molmasse

$M_n$ des Poly(alkylen-phosphats) berechnet werden und umgekehrt (siehe Beispiele) Es gilt dabei folgende Formel:

$$\overline{n} = (M_n - M_E)/M_R$$

mit

$\overline{n}$ : gewichteter Mittelwert der Anzahl der Repetiereinheiten der in der Mischung enthaltenen Poly(alkylenphosphate) der Formel (I),

$M_n$: zahlenmittlere Molmasse in g/mol (siehe Beispiele, durch Gelpermeationschromatographie bestimmt),

$M_E$: Summe der Molmassen der Endgruppen in g/mol und

$M_R$: Molmasse der Repetiereinheit in g/mol.

Für die Anwendung als Flammschutzmittel in Polyurethanen geeignete Poly(alkylenphosphate) sind bekannt z. B. aus WO 2002079315 A1. Bevorzugt ist darin das durch die CAS-Nummer 184538-58-7 identifizierte Poly(alkylenphosphat) der Formel (I), in der $R^1$ bis $R^4$ für Ethylreste stehen, A für einen Ethylenrest steht, $\overline{n}$ für eine Zahl zwischen 2 und 20 steht und das keine monomeren (d.h. $n$ = 0) oder dimeren (d.h. $n$ = 1) Bestandteile enthält. Dieses Produkt wird unter dem Handelsnamen Fyrol® PNX vermarktet. Nachteilig an Fyrol® PNX ist, dass es sich zwar mit Polyether-Polyolen zu Polyurethanschaumstoffen verarbeiten lässt, es aber nicht mit Polyester-Polyolen verträglich ist. Weiterhin weist Fyrol® PNX eine hohe Viskosität von 1241 mPa·s bei 23 °C auf.

Aus EP 2 687 534 A1 bekannte Poly(alkylenphosphate) der Formel (I), in denen beispielsweise $R^1$ bis $R^4$ für Ethylreste stehen, A für einen 3-Oxa-1,5-pentylenrest steht und $\overline{n}$ für eine Zahl zwischen 1,10 und 2,00 steht, haben im Vergleich zu Fyrol® PNX eine niedrigere Viskosität und sind sowohl mit Polyether-Polyolen als auch mit Polyester-Polyolen verträglich.

Poly(alkylenphosphate) mit weiter verringerten Emissionen (siehe Beispiele) sind aus EP-A 3388479 bekannt. Allerdings weisen diese Produkte eine noch zu geringere Flammschutzwirksamkeit auf.

Mischungen aus Poly(alkylenphosphaten) und niedermolekularen, phosphorbasierten Flammschutzmitteln sind beispielsweise aus US 7,288,577 B1 und EP 2 848 640 A1 bekannt. Nachteilig an den dort beschriebenen Mischungen ist, dass die Flammschutzwirksamkeit der Mischungen in keinem Fall höher war als die der enthaltenen Poly(alkylenphosphate). Eine Verbesserung der Wirksamkeit der Flammschutzmittel im oben definierten Sinn ist also nicht vollumfänglich erreicht worden. Weiterhin sind Arylphosphate als Mischungskomponente aufgrund ökotoxikologischer Eigenschaften in manchen Anwendungen unerwünscht.

Neue Technologien stellen zunehmend Ansprüche an Flammschutzmittel, die die aus dem Stand der Technik bekannten Substanzen nicht mehr erfüllen können. So werden im Automobilbau immer mehr Kunststoffkomponenten verbaut, was eine steigende Brandlast mit sich bringt. Gleichzeitig werden Hochvoltsysteme und leistungsstarke Batterien eingesetzt, die bei Fehlfunktion gefährliche Zündquellen darstellen. Um den sich daraus ergebenden strengeren Brandschutzanforderungen gerecht zu werden, sind Flammschutzmittel gefragt, die nicht nur eine hohe Wirksamkeit bieten, sondern darüber hinaus die Kombination aus ökotoxikologischer Unbedenklichkeit, Emissionsarmut, leichter Handhabbarkeit und anwendungstechnischer Flexibilität.

Aufgabe der vorliegenden Erfindung war es daher, halogen- und arylphosphatfreie Flammschutzmittel für Polyurethane bereit zu stellen, die sich durch niedrige Emissionen, eine niedrige Viskosität und eine hohe Flammschutzwirksamkeit auszeichnen und eine gute Verträglichkeit sowohl mit Polyether- als auch mit Polyester-Polyolen aufweisen.

Diese Aufgabe wird gelöst durch Zubereitungen, die neben einer Mischung von Poly(alkylenphosphaten) bestimmte cyclische Phosphonsäureester enthalten.

Gegenstand der vorliegenden Erfindung sind daher Flammschutzmittel-Zubereitungen, dadurch gekennzeichnet, dass sie

i) eine Mischung , enthaltend Poly(alkylenphosphate) entsprechend der Formel (I)

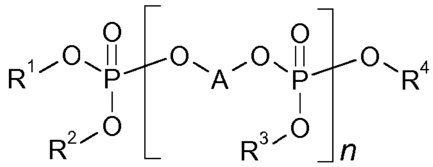

(I),

worin
$R^1$, $R^2$, $R^3$ und $R^4$ unabhängig voneinander jeweils für einen n-Butylrest oder einen 2-Methylpropylrest stehen,
A für einen Rest der Formel $-CHR^5-CHR^6-(O-CHR^7-CHR^8)_a-$ steht,
worin
a für eine ganze Zahl von 1 bis 5 steht und
$R^5$, $R^6$, $R^7$ und $R^8$ unabhängig voneinander für Wasserstoff oder Methyl stehen,
und
*n* für eine ganze Zahl von 0 bis 100, bevorzugt von 0 bis 50 und besonders bevorzugt von 0 bis 30 steht,
mit der Maßgabe, dass sich die in der Mischung enthaltenen Poly(alkylenphosphate) der Formel (I) zumindest in der Anzahl *n* der Repetiereinheiten voneinander unterscheiden, und
der gewichtete Mittelwert der Anzahl der Repetiereinheiten $\overline{n}$ der Poly-(alkylenphosphate) der Formel (I) im Bereich 1,10 bis 4,00 beträgt,
und

ii) mindestens einen cyclischen Phosphonsäureester der Formel (II)

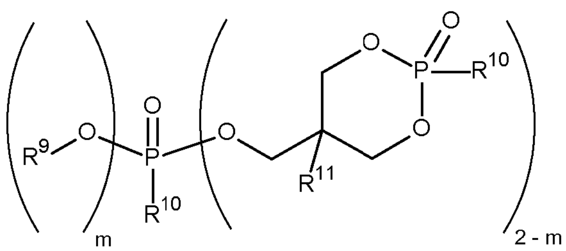

(II)

worin
$R^9$, $R^{10}$ und $R^{11}$ unabhängig voneinander jeweils für einen geradkettigen oder verzweigten $C_1$- bis $C_4$-Alkylrest stehen und
m für die Zahl 0 oder 1 steht,
enthält.

Bevorzugt handelt es sich bei den in den erfindungsgemäßen Zubereitungen enthaltenen Poly(alkylenphosphaten) der Formel (I) um solche, worin a für die Zahl 1 steht.

Ebenfalls bevorzugt handelt es sich bei den in den erfindungsgemäßen Zubereitungen enthaltenen Poly(alkylenphosphaten) der Formel (I) um solche, worin die Reste $R^5$, $R^6$, $R^7$ und $R^8$ alle gleich sind und für Wasserstoff stehen.

Ebenfalls bevorzugt handelt es sich bei den in den erfindungsgemäßen Zubereitungen enthaltenen Poly(alkylenphosphaten) der Formel (I) um solche, worin die Reste $R^1$, $R^2$, $R^3$ und $R^4$ alle gleich sind und für n-Butylreste stehen. In einer alternativen, ebenfalls bevorzugten Ausführungsform der Erfindung sind die Reste $R^1$, $R^2$, $R^3$ und $R^4$ alle gleich und stehen für 2-Methylpropylreste.

Bevorzugt weisen die in den erfindungsgemäßen Zubereitungen enthaltenen Poly(alkylenphosphate) der Formel (I) einen Mittelwert der Anzahl der Repetiereinheiten $\overline{n}$ auf, der im Bereich von 1,20 bis 3,00; besonders bevorzugt im Bereich von 1,03 bis 2,60 und ganz besonders bevorzugt im Bereich von 1,30 bis 1,90 liegt.

Im Falle der vorliegenden Erfindung wird die zahlenmittlere Molmasse $M_n$ der in der erfindungsgemäßen Zubereitungen enthaltenen Poly(alkylenphosphate) der Formel (I) durch Gelpermeationschromatographie mit Tetrahydrofuran als Elutionsmittel gegen Polystyrolstandards bestimmt. Diese Methode ist dem Fachmann bekannt, beispielsweise aus DIN 55672-1:2007-08. Aus $M_n$ lässt sich unter Berücksichtigung der Stöchiometrie der Formel (I) der gewichtete Mittelwert der Anzahl der Repetiereinheiten $\overline{n}$ der in der Mischung enthaltenen Poly(alkylenphosphate) leicht berechnen (siehe Beispiele).

Ganz besonders bevorzugt sind Zubereitungen enthaltend Poly(alkylenphosphate) der Formel (I), worin
a für die Zahl 1 steht,
$R^5$, $R^6$, $R^7$ und $R^8$ alle gleich sind und für Wasserstoff stehen
und
*n* für eine ganze Zahl von 0 bis 100, bevorzugt von 0 bis 50 und besonders bevorzugt von 0 bis 30 steht,
mit der Maßgabe, dass sich die in der Mischung enthaltenen Poly(alkylenphosphate) der Formel (I) zumindest in der Anzahl *n* der Repetiereinheiten voneinander unterscheiden, und
der gewichtete Mittelwert der Anzahl der Repetiereinheiten $\bar{n}$ der Poly(alkylenphosphate) der Formel (I) im Bereich von 1,10 bis 4,00, bevorzugt von 1,20 bis 3,00, besonders bevorzugt von 1,30 bis 2,60 und ganz besonders bevorzugt von 1,30 bis 1,90 liegt.

Ebenfalls ganz besonders bevorzugt sind Zubereitungen enthaltend Poly(alkylenphosphate) der Formel (I), worin
a für die Zahl 1 steht,
$R^1$, $R^2$, $R^3$ und $R^4$ alle gleich sind und für n-Butylreste stehen,
$R^5$, $R^6$, $R^7$ und $R^8$ alle gleich sind und für Wasserstoff stehen,
und
*n* für eine ganze Zahl von 0 bis 100, bevorzugt von 0 bis 50 und besonders bevorzugt von 0 bis 30 steht,
mit der Maßgabe, dass die in der Zubereitung enthaltenen Poly(alkylenphosphate) der Formel (I) zumindest in der Anzahl *n* der Repetiereinheiten voneinander unterscheiden, und
der gewichtete Mittelwert der Anzahl der Repetiereinheiten $\bar{n}$ der Poly-(alkylenphosphate) der Formel (I) im Bereich von 1,10 bis 4,00, bevorzugt von 1,20 bis 3,00, besonders bevorzugt von 1,30 bis 2,60 und ganz besonders bevorzugt von 1,30 bis 1,90 liegt.

Ebenfalls ganz besonders bevorzugt sind Zubereitungen enthaltend Poly(alkylenphosphate) der Formel (I), worin
a für die Zahl 1 steht,
$R^1$, $R^2$, $R^3$ und $R^4$ alle gleich sind und für 2-Methylpropylreste stehen,
$R^5$, $R^6$, $R^7$ und $R^8$ alle gleich sind und für Wasserstoff stehen
und
*n* für eine ganze Zahl von 0 bis 100, bevorzugt von 0 bis 50 und besonders bevorzugt von 0 bis 30 steht,
mit der Maßgabe, dass sich die in der Zubereitung enthaltenen Poly(alkylenphosphate) der Formel (I) zumindest in der Anzahl *n* der Repetiereinheiten voneinander unterscheiden, und
der gewichtete Mittelwert der Anzahl der Repetiereinheiten $\bar{n}$ der Poly-(alkylenphosphate) der Formel (I) im Bereich von 1,10 bis 4,00, bevorzugt von 1,20 bis 3,00, besonders bevorzugt von 1,30 bis 2,60 und ganz besonders bevorzugt von 1,30 bis 1,90 liegt.

Die Mischung enthaltend Poly(alkylenphosphate) entsprechend der Formel (I) ist vorzugsweise dadurch charakterisiert, dass in ihrer Molmassenverteilung auch die dimeren Phosphorsäureester der Formel (I) (d.h. $n = 1$) enthalten sind. Bevorzugt beträgt der Flächenanteil der dimeren Phosphorsäureester der Formel (I) (d.h. $n = 1$) in der Molmassenverteilung von 10 % bis 70 % (Flächenprozent bestimmt durch Gelpermeationschromatographie mit Tetrahydrofuran als Elutionsmittel gegen Polystyrolstandards) in Anlehnung an die Methode aus DIN 55672-1:2007-08.

Die in den erfindungsgemäßen Zubereitungen enthaltenen Poly(alkylenphosphate) können prinzipiell hergestellt werden durch dem Fachmann bekannte Methoden zur Herstellung von Alkylphosphaten, beispielsweise wie sie in EP-A 2 687 534 beschrieben sind.

Bevorzugt sind in der erfindungsgemäßen Zubereitung cyclische Phosphonsäureester der Formel (II) enthalten, in denen $R^9$ für Methyl oder Ethyl steht. Besonders bevorzugt steht $R^9$ für Methyl.

Bevorzugt sind in der erfindungsgemäßen Zubereitung cyclische Phosphonsäureester der Formel (II) enthalten, in denen $R^{10}$ für Methyl oder Ethyl steht. Besonders bevorzugt steht $R^{10}$ für Methyl.

Bevorzugt sind in der erfindungsgemäßen Zubereitung cyclische Phosphonsäureester der Formel (II) enthalten, in denen $R^{11}$ für Methyl oder Ethyl steht. Besonders bevorzugt steht $R^{11}$ für Ethyl.

Bevorzugt sind in der erfindungsgemäßen Zubereitung mindestens zwei verschiedene cyclische Phosphonsäureester der Formel (II) enthalten. Besonders bevorzugt sind mindestens ein cyclischer Phosphonsäureester der Formel (II) mit m = 0 und mindestens ein cyclischer Phosphonsäureester der Formel (II) mit m = 1 enthalten.

Die in den erfindungsgemäßen Zubereitungen enthaltenen cyclischen Phosphonsäureester der Formel (II) sind kommerziell erhältlich oder können nach bekannten Methoden hergestellt werden.

Vorzugsweise sind die erfindungsgemäßen Flammschutzmittel-Zubereitungen halogenfrei. Der Begriff "halogenfrei" im Sinne der vorliegenden Erfindung bedeutet, dass die Komponenten der Zubereitung die Elemente Fluor, Chlor, Brom und/oder Iod nicht enthalten und dass die Zubereitungen keine anderen Substanzen in einer Menge enthalten, die einen Gehalt an einem oder mehreren der Elementen Fluor, Chlor, Brom und Iod von größer als 5000 ppm

bezogen auf die Zubereitung verursacht.

Bevorzugt enthält die erfindungsgemäße Flammschutzmittel-Zubereitung 60 bis 99,9 Gew.-%, der Mischung enthaltend Poly(alkylenphosphate) entsprechend der Formel (I) und 0,1 bis 40 Gew.-% an mindestens einem cyclischen Phosphonsäureester der Formel (II), bezogen auf die gesamte Zubereitung. Besonders bevorzugt enthält die erfindungsgemäße Phosphorsäureester-Zubereitung 70 bis 99 Gew.-%, Mischung enthaltend Poly(alkylenphosphate) und 1 bis 30 Gew.-% an mindestens einem cyclischen Phosphonsäureester der Formel (II), bezogen auf die gesamte Zubereitung.

Bevorzugt handelt es sich bei den erfindungsgemäßen Flammschutzmittel-Zubereitungen um bei 23 °C flüssige Stoffe. Bevorzugt weisen die erfindungsgemäßen Flammschutzmittel-Zubereitungen bei 23 °C eine Viskosität zwischen 20 und 1000 mPa·s auf. Besonders bevorzugt beträgt die Viskosität bei 23 °C von 20 bis 900 mPa·s.

Bevorzugt können die erfindungsgemäßen Flammschutzmittel-Zubereitungen neben der Mischung enthaltend Poly(alkylenphosphate) der Formel (I) und cyclische Phosphonsäureester der Formel (II) je nach Anwendungsgebiet ein oder mehrere Hilfsmittel, vorzugsweise aus der Gruppe der Lösungsmittel, Antioxidantien, Stabilisatoren und Farbstoffen, enthalten. Als solche Hilfsmittel kommen beispielsweise in Frage:

- Lösungsmittel, wie z. B. Alkylester aliphatischer oder aromatischer Di- oder Tricarbonsäuren,
- Antioxidantien und Stabilisatoren, wie z. B. sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole, und
- Farbstoffe, wie z. B. lösliche organische Farbstoffe, Eisenoxidpigmente oder Ruße.

Die erfindungsgemäßen Flammschutzmittel-Zubereitungen eignen sich zur Verwendung als Flammschutzmittel, vorzugsweise für Polyurethane. Weiterer Gegenstand der vorliegenden Erfindung ist die Verwendung der erfindungsgemäßen Flammschutzmittel-Zubereitungen als Flammschutzmittel in Polyurethanen.

Die Flammschutzmittel-Zubereitungen können in allen dem Fachmann bekannten Anwendungen für flammwidrige Polyurethane verwendet werden, insbesondere bevorzugt in duroplastischen Polyurethanen, Polyurethanschaumstoffen, Polyurethan-Elastomeren, thermoplastischen Polyurethanen, Polyurethan-Beschichtungen und -Lacken, Polyurethan-Klebstoffen und -Bindemitteln oder Polyurethan-Fasern. Bevorzugt werden die Zubereitungen in Polyurethanschaumstoffen verwendet. Besonders bevorzugt werden die Zubereitungen in Polyurethanweichschaumstoffen verwendet. Ganz besonders bevorzugt werden die Zubereitungen in Polyurethanweichschaumstoffen verwendet, welche aus Polyether-Polyolen hergestellt werden, d.h. für Polyether-Polyurethanweichschaumstoffe. In einer alternativen, ebenfalls ganz besonders bevorzugten Ausführungsform der Erfindung werden die Zubereitungen in Polyurethanweichschaumstoffen verwendet, welche aus Polyester-Polyolen hergestellt werden, d.h. für Polyester-Polyurethanweichschaumstoffe.

Gegenstand der vorliegenden Erfindung sind weiterhin auch Polyurethane, die mindestens eine erfindungsgemäße Flammschutzmittel-Zubereitung enthalten. Durch geeignete Wahl der Menge an enthaltenen Flammschutzmittel-Zubereitungen lassen sich diese Polyurethane flammwidrig herstellen.

Die erfindungsgemäßen flammwidrigen Polyurethane können hergestellt werden, indem man organische Polyisocyanate mit Verbindungen mit mindestens zwei gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart von mindestens einer erfindungsgemäßen Flammschutzmittel-Zubereitung umsetzt. Die Verbindungen mit mindestens zwei gegenüber Isocyanaten reaktionsfähigen Wasserstoffatomen werden als Polyolkomponente bezeichnet.

Die erfindungsgemäßen Flammschutzmittel-Zubereitungen werden in einer Menge von 0,5 bis 30 Gewichtsteilen, bevorzugt 3 bis 25 Gewichtsteilen, bezogen auf 100 Gewichtsteile Polyolkomponente, eingesetzt.

Bei den Polyurethanen handelt es sich um Polymere auf Isocyanatbasis, die vorwiegend Urethan- und/oder Isocyanurat- und/oder Allophanat- und/oder Uretdion- und/oder Harnstoff- und/oder Carbodiimidgruppen aufweisen. Die Herstellung von Polymeren auf Isocyanatbasis ist an sich bekannt und z. B. in DE-OS 16 94 142, DE-OS 16 94 215 und DE-OS 17 20 768 sowie im Kunststoff-Handbuch Band VII, Polyurethane, herausgegeben von G. Oertel, Carl-Hanser-Verlag München, Wien 1993, beschrieben.

Bei den erfindungsgemäßen flammwidrigen Polyurethanen handelt es sich vorzugsweise um duroplastische Polyurethane, Polyisocyanurate, Polyurethanschaumstoffe, Polyurethan-Elastomere, thermoplastische Polyurethane, Polyurethan-Beschichtungen und Polyurethan-Lacke, Polyurethan-Klebstoffe und -Bindemittel oder Polyurethan-Fasern.

In einer bevorzugten Ausführungsform der Erfindung handelt es sich bei den erfindungsgemäßen flammwidrigen Polyurethanen um flammwidrige Polyurethanschaumstoffe.

Polyurethanschaumstoffe werden grob in weiche und harte Schaumstoffe unterschieden. Zwar können Weich-

und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstruktur und seine Eigenschaften beeinflusst. Weitere Einzelheiten zu Hart- und Weichschaumstoffen, den zu ihrer Herstellung einsetzbaren Ausgangsstoffen sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann’s Encyclopedia of Industrial Chemistry Release 2005, Electronic Release, 7th ed., chap. 7 ("Foams"), Wiley-VCH, Weinheim 2005.

Bevorzugt weisen die erfindungsgemäßen Polyurethanschaumstoffe Raumgewichte von 10 - 150 kg/$m^3$ auf. Besonders bevorzugt weisen sie Raumgewichte von 20 - 50 kg/$m^3$ auf.

Für die Herstellung der Schaumstoffe auf Isocyanatbasis werden folgende Ausgangskomponenten eingesetzt:

1) Aliphatische, cycloaliphatische, araliphatische, aromatische und heterocyclische Polyisocyanate (z.B. W. Siefken in Justus Liebigs Annalen der Chemie, 562, S. 75-136), beispielsweise solche der Formel $Q(NCO)_n$, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten. Besonders bevorzugt werden in der Regel die technisch leicht zugänglichen Polyisocyanate, die sich vom 2,4- und/oder 2,6-Toluylendiisocyanat bzw. von 4,4’- und/oder 2,4’-Diphenylmethandiisocyanat ableiten.

2) Verbindungen mit mindestens zwei gegenüber Isocyanaten reaktionsfähigen Wasserstoffatomen mit einem Molekulargewicht von 400 bis 8.000 g/mol ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich um Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 beschrieben werden. Die mindestens zwei Hydroxylgruppen aufweisenden Polyether und Polyester sind erfindungsgemäß bevorzugt.
Die erfindungsgemäßen Polyurethanschaumstoffe lassen sich also durch entsprechende, leicht dem Stand der Technik zu entnehmende Wahl der Ausgangsstoffe als Hart- oder Weichschaumstoffe herstellen.
Gegebenenfalls sind weitere Ausgangskomponenten Verbindungen mit mindestens zwei gegenüber Isocyanaten reaktionsfähigen Wasserstoffatomen und einem Molekulargewicht von 32 bis 399 g/mol. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hierfür werden ebenfalls in der DE-OS 28 32 253 beschrieben.

3) Wasser und/oder leicht flüchtige organische Substanzen als Treibmittel, z.B. n-Pentan, i- Pentan, Cyclopentan, Aceton, halogenhaltige Alkane, wie Trichlormethan, Methylenchlorid oder Chlorfluoralkane, $CO_2$.

4) Gegebenenfalls werden Hilfs- und Zusatzmittel mitverwendet, wie Katalysatoren der an sich bekannten Art, z.B. mit Alkylgruppen substituierte Amine, Amidine und Guanidine, Organozinn-Verbindungen oder Organophosphor-Verbindungen, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, z.B. Epoxyverbindungen oder Carbodiimide, Kernverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE-OS 27 32 292). Als Kernverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein.

Als weitere Flammschutzmittel können neben den erfindungsgemäßen Flammschutzmittel-Zubereitungen in den erfindungsgemäßen Polyurethanen noch folgende Verbindungen enthalten sein:

- organische Phosphorverbindungen, wie beispielsweise Triethylphosphat, Triphenylphosphat, Diphenylkresylphosphat, Trikresylphosphat, isopropylierte oder butylierte Arylphosphate, aromatische Bisphosphate, Neopentylglycol-bis(diphenylphosphat), chlorhaltige Phosphorsäureester wie z.B. Tris(chlorisopropyl)phosphat oder Tris(dichloropropyl)phosphat, Dimethylmethanphosphonat, Diethylethanphosphonat, Dimethylpropanphosphonat, Diethylphosphinsäure-Derivate und -Salze, andere oligomere Phosphate oder Phosphonate, Hydroxylgruppen-haltige Phosphorverbindungen, 5,5-Dimethyl-1,3,2-dioxaphosphorinan-2-oxid-Derivate, 9,10-Dihydro-9-oxa-10-phosphaphenanthren-10-oxid (DOPO) und seine Derivate,

- anorganische Phosphorverbindungen, wie beispielsweise Ammoniumphosphat, Ammoniumpolyphosphat, Melaminphosphat, Melaminpolyphosphat,

- Stickstoffverbindungen, wie beispielsweise Melamin, Melamincyanurat,

- Bromverbindungen, wie beispielsweise Alkylester einer Tetrabrombenzoesäure, bromhaltige Diole hergestellt aus Tetrabromphthalsäureanhydrid, bromhaltige Polyole, bromhaltige Diphenylether, oder

- anorganische Flammschutzmittel, wie beispielsweise Aluminiumhydroxid, Boehmit, Magnesiumhydroxid, Blähgraphit oder Tonmineralien.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl-Hanser-Verlag, München, 1993, auf den Seiten 104 bis 123 beschrieben.

Weiterer Gegenstand der vorliegenden Erfindung ist ein Verfahren zur Herstellung von Polyurethanen durch Umsetzung von organischen Polyisocyanaten mit Verbindungen mit mindestens zwei gegenüber Isocyanaten reaktionsfähigen Wasserstoffatomen und üblichen Treibmitteln, Stabilisatoren, Katalysatoren, Aktivatoren und/oder weiteren üblichen Hilfs- und Zusatzstoffen bei 20 bis 80 °C, in dem in einer Menge von 0,5 bis 30 Gewichtsteilen bezogen auf 100 Gewichtsteile Polyolkomponente, mindestens eine erfindungsgemäße Phosphorsäureester-Zubereitung eingesetzt wird. Bevorzugt werden die Phosphorsäureester-Zubereitungen in einer Menge von 3 bis 25 Gewichtsteilen bezogen auf 100 Gewichtsteile Polyolkomponente eingesetzt.

Zur Durchführung des Verfahrens zur Herstellung von erfindungsgemäßen Polyurethanen werden die oben beschriebenen Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US 2,764,565 beschrieben werden. Einzelheiten über Verarbeitungseinrichtungen, die auch erfindungsgemäß in Frage kommen, werden im Kunststoff-Handbuch Band VII, Polyurethane, herausgegeben von G. Oertel, Carl-Hanser-Verlag, München, Wien 1993, auf den Seiten 139 bis 192 beschrieben.

Nach dem erfindungsgemäßen Verfahren lassen sich auch kalthärtende Schaumstoffe herstellen (GB-PS 11 62 517, DE-OS 21 53 086). Selbstverständlich können aber auch Schaumstoffe durch Blockverschäumung oder nach dem an sich bekannten Doppeltransportbandverfahren hergestellt werden. Polyisocyanuratschaumstoffe werden nach den hierfür bekannten Verfahren und Bedingungen hergestellt.

Das erfindungsgemäße Verfahren erlaubt die Herstellung von Polyurethanschaumstoffen als Hart- oder Weichschäume in kontinuierlicher oder diskontinuierlicher Herstellungsweise oder als geschäumte Formartikel. Bevorzugt ist das erfindungsgemäße Verfahren bei der Herstellung von Weichschaumstoffen, die durch ein Blockverschäumungsverfahren hergestellt werden.

Die nach der Erfindung erhältlichen Polyurethane finden bevorzugt Anwendung in Möbelpolsterungen, Textileinlagen, Matratzen, Fahrzeugsitzen, Armlehnen, Bauelementen, Sitz-oder Armaturverkleidungen, Kabelummantelungen, Dichtungen, Beschichtungen, Lacken, Klebstoffen, Haftvermittlern oder Fasern.

Anhand der nachfolgenden Beispiele wird die Erfindung näher erläutert, ohne dass dadurch eine Einschränkung der Erfindung bewirkt werden soll.

## Beispiele

## Synthesebeispiele

**Allgemeine Synthesevorschrift für Mischungen enthaltend Poly(alkylenphosphate) entsprechend der Formel (I) gemäß EP-A 3388479 (Synthesebeispiele S1 bis S5)**

Ein Reaktor mit Rührer, Tropftrichter, Rückflusskühler und Vakuumeinrichtung wurde mit der in Tabelle 1 angegebenen Menge (Gewichtsteile) Phosphoroxychlorid befüllt. Das Phosphoroxychlorid wurde auf 10 bis 20 °C temperiert. Bei einem Vakuum im Bereich von 500 bis 700 mbar wurde die in der Tabelle 1 angegebene Menge Diethylenglycol zugetropft. Nach Ende des Zutropfens wurde der Druck weiter bis auf schließlich 5 bis 15 mbar abgesenkt und die Temperatur auf einen Wert von 20 bis 30 °C angehoben. Ein nahezu farbloser, flüssiger Rückstand verblieb.

In einem weiteren Reaktor mit Rührer, Tropftrichter und Rückflusskühler wurde bei 20 bis 30°C die in Tabelle 1 angegebenen Menge 2-Methylpropanol bzw. n-Butanol vorgelegt und mit dem oben erhaltenen Rückstand versetzt. Die Mischung wurde weiter bei einer Temperatur im Bereich von 20 bis 30°C bis zum Abklingen der Reaktion gerührt, und dann durch Zugabe von Natronlauge neutralisiert. Es bildeten sich zwei klare flüssige Phasen. Diese wurden getrennt und die organische Phase durch Destillation von überschüssigem Reagenz befreit. Der Destillationsrückstand wurde mit Wasser gewaschen und schließlich wurde restliches Wasser destillativ entfernt. Als Rückstand verblieben die Mischungen in Form farbloser Flüssigkeiten.

**Synthesevorschrift für eine Mischung enthaltend Poly(alkylenphosphate) gemäß EP-A 2 687 534 (Synthesebeispiel S6)**

Ein Reaktor mit Rührer, Tropftrichter, Rückflusskühler und Vakuumeinrichtung wurde mit der in Tabelle 1 angegebenen Menge (Gewichtsteile) Phosphoroxychlorid befüllt. Das Phosphoroxychlorid wurde auf eine Temperatur von 10 bis 20°C temperiert. Bei einem Vakuum im Bereich von 500 bis 700 mbar wurde die in der Tabelle 1 angegebene Menge Diethylenglycol zugetropft. Nach Ende des Zutropfens wurde der Druck weiter bis auf schließlich 5 bis 15 mbar abgesenkt und die Temperatur auf einen Wert von 20 bis 30°C angehoben. Ein nahezu farbloser, flüssiger Rückstand verblieb.

In einem weiteren Reaktor mit Rührer, Tropftrichter und Rückflusskühler wurde bei einer Temperatur im Bereich von 20 bis 30°C die in Tabelle 1 angegebenen Menge Ethanol vorgelegt und mit dem oben erhaltenen Rückstand versetzt. Die Mischung wurde weiter bei 20 bis 30°C bis zum Abklingen der Reaktion gerührt, und dann durch Zugabe von konzentrierter Natronlauge neutralisiert. Daraufhin wurde so viel Dichlormethan und Wasser zugefügt, dass zwei klare flüssige Phasen entstanden. Diese wurden getrennt und die organische Phase durch Destillation vom Dichlormethan, überschüssigem Ethanol und Wasser befreit. Als Rückstand verblieb die Oligomerenischung in Form einer farblosen Flüssigkeit.

**Bestimmung des gewichteten Mittelwerts der Anzahl der Repetiereinheiten *n* in den Mischungen S1 bis S6**

Die in den Synthesebeispielen S1 bis S6 hergestellten Produkte erwiesen sich nach Analyse durch Gelpermeationschromatographie (GPC) als Mischungen. Die zahlenmittleren Molmassen $M_n$ der Mischungen wurden durch GPC mit Tetrahydrofuran als Elutionsmittel gegen Polystyrolstandards in Anlehnung an die Methode aus DIN 55672-1:2007-08 bestimmt. Der gewichtete Mittelwert der Anzahl der Repetiereinheiten $\overline{n}$ der in der Mischung enthaltenen Poly(alkylenphosphate) entsprechend der Formel (I) wurde aus der gemessenen zahlenmittleren Molmasse $M_n$ nach folgender Formel berechnet:

$$\overline{n} = (M_n - M_E)/M_R$$

mit

$\overline{n}$ : gewichteter Mittelwert der Anzahl der Repetiereinheiten der in der Mischung enthaltenen Poly(alkylenphosphate) der Formel (I),

$M_n$: zahlenmittlere Molmasse in g/mol durch Gelpermeationschromatographie in Anlehnung an die Methode aus DIN 55672-1:2007-08 bestimmt,

$M_E$: Summe der Molmassen der Endgruppen in g/mol und

$M_R$: Molmasse der Repetiereinheit in g/mol.

Für die Mischungen S1 bis S5 aus Poly(alkylenphosphaten) der Formel (I) mit $R^1 = R^2 = R^3 = R^4$ = n-Butyl oder 2-Methylpropyl und A = $-CH_2CH_2OCH_2CH_2-$ mit a = 1 gilt $M_E$ = 266,31 g/mol und $M_R$ = 224,19 g/mol. Für die nicht erfindungsgemäße Vergleichssubstanz S6 aus Poly(alkylenphosphaten) der Formel (I) mit $R^1 = R^2 = R^3 = R^4$ = Ethyl und A = $CH_2CH_2OCH_2CH_2-$ mit a = 1 gilt $M_E$ = 182,16 g/mol und $M_R$ = 194,14 g/mol. Die Ergebnisse sind in Tabelle 1 aufgelistet.

**Tabelle 1: Verwendete Rohstoffe (Gewichtsteile) zur Herstellung der Mischungen (Synthesebeispiele S1 bis S5) und der Vergleichssubstanz S6 und Ergebnisse der Gelpermeationschromatographie**

| Beispiel | S1 | S2 | S3 | S4 | S5 | S6 |
|---|---|---|---|---|---|---|
| Phosphoroxychlorid | 149,6 | 182,8 | 154,1 | 151,7 | 154,1 | 306,7 |
| Diethylenglycol | 74,0 | 68,3 | 62,7 | 66,3 | 62,7 | 118,7 |
| 2-Methylpropanol | 380,0 | 500,0 | 444,7 | 360,0 | | |
| n-Butanol | | | | | 444,7 | |
| Ethanol | | | | | | 618,2 |
| Flächenanteil des Dimeren (d.h. *n* = 1) | 27% | 66% | 53 % | 41 % | 51 % | 43 % |
| $M_n$ [g/mol] | 844 | 608 | 656 | 709 | 649 | 462 |
| $\bar{n}$ | 2,58 | 1,53 | 1,74 | 1,97 | 1,71 | 1,44 |

Außer den in Tabelle 1 aufgeführten Syntheseprodukten wurden zur Herstellung der Flammschutzmittel-Zubereitungen die folgenden Substanzen eingesetzt:

Fyrol® PNX: Handelsprodukt der ICL-IP Bitterfeld GmbH, Poly(alkylenphosphat) der Formel (I), in der R1 bis R4 für Ethylreste stehen, A für einen Ethylenrest steht, $\bar{n}$ für eine Zahl zwischen 2 und 20 steht und die keine monomeren (d.h. *n* = 0) oder dimeren (d.h. *n* = 1) Bestandteile enthält.
Die Gelpermeationschromatographie unter den oben angegebenen Bedingungen ergab einen Flächenanteil des Dimeren (d.h. *n* = 1) von 2,4 %, eine Zahlenmittlere Molmasse $M_n$ von 640 g/mol und unter Berücksichtigung von $M_E$ = 182,16 g/mol und $M_R$ = 152,09 g/mol damit einen gewichteten Mittelwert der Anzahl der Repetiereinheiten $\bar{n}$ von 3,01.

Amgard® CU: Handelsprodukt der Lanxess Deutschland GmbH, Mischung cyclischer Phosphonsäureester der Formel (II) mit m = 0 und m = 1 und R9, R10 = Methyl und R11 = Ethyl.

**Herstellung der erfindungsgemäßen Flammschutzmittel-Zubereitungen**

Die in Tabelle 2 gelisteten Komponenten wurden in den angegebenen Massenverhältnissen eingewogen und unter Stickstoffatmosphäre bei 25 °C mit einem mechanischen Rührwerk bei 300 $min^{-1}$ verrührt.

**Viskositäten der Komponenten und der Flammschutzmittel-Zubereitungen**

Die Viskositäten der verwendeten Rohstoffe und der hergestellten Flammschutzmittel-Zubereitungen wurden mit einem handelsüblichen Kugelfall-Viskosimeter bei 23 °C bestimmt und sind in Tabelle 2 aufgelistet.

**Tabelle 2: Zusammensetzung der Flammschutzmittel-Zubereitungen und Viskositäten**

| Beispiel | Mischung (Art) | Mischung (Massenteile) | Amgard® CU (Massenteile) | Viskosität (mPa·s/23 °C) |
|---|---|---|---|---|
| V1 | S1 | 100 | 0 | 315 |
| V2 | S2 | 100 | 0 | 79 |
| V3 | S3 | 100 | 0 | 97 |

(fortgesetzt)

| Beispiel | Mischung (Art) | Mischung (Massenteile) | Amgard® CU (Massenteile) | Viskosität (mPa·s/23 °C) |
|---|---|---|---|---|
| V4 | S4 | 100 | 0 | 138 |
| V5 | S5 | 100 | 0 | 93 |
| V6 | S6 | 100 | 0 | 58 |
| V7 | Fyrol® PNX | 100 | 0 | 1.241 |
| V8 | keine | 0 | 100 | 302.270 |
| B1 | S1 | 75 | 25 | 968 |
| B2 | S2 | 75 | 25 | 298 |
| B3 | S3 | 75 | 25 | 350 |
| B4 | S4 | 75 | 25 | 462 |
| V10 | S6 | 75 | 25 | 350 |
| V9 | Fyrol® PNX | 75 | 25 | 3.473 |
| B1-B4 = erfindungsgemäße Beispiele | | | | |

**Auswertung der Ergebnisse der Gelpermeationschromatographie und der Viskositätsmessung**

Die Molmassenverteilung der zur Herstellung der Mischungen S1 bis S5 zeichnen sich durch einen Anteil am Dimeren, also dem Poly(alkylenphosphat) der Formel (I) mit $n$ = 1, von 27 % bis 66 % aus. Das Vergleichsmaterial Fyrol PNX enthält dagegen nur 2,4 % Dimer.

Die Viskosität von Amgard® CU (Vergleichsbeispiel V8) ist mit 302.270 mPa·s (23°C) so hoch, dass eine Handhabung und Verarbeitung mit der zur Herstellung von Polyurethanen üblichen Gerätschaft auf erhebliche technische Probleme stößt. Die Viskositäten der erfindungsgemäßen Flammschutzmittel-Zubereitungen B1 bis B4 liegen alle im bevorzugten Bereich von 20 mPa·s bis 1000 mPa·s (23°C) und damit niedriger als die Viskosität von Fyrol PNX (Vergleichsbeispiel V7) und einer Flammschutzmittel-Zubereitungen aus Fyrol PNX und Amgard CU (Vergleichsbeispiel V9).

Die nicht erfindungsgemäße Mischung S6 (siehe Vergleichsbeispiel V6) sowie eine daraus hergestellte Mischung mit Amgard® CU (siehe Vergleichsbeispiel V10) zeichnen sich durch akzeptable Viskositäten aus. Allerdings verursacht S6 im Schaumstoff erhöhte Emissionen (siehe unten in Tabelle 4) und ist daher für den Zweck der vorliegenden Erfindung schlecht geeignet.

**Herstellung von Polyurethanweichschaumstoffen**

**Tabelle 3: Rohstoffe und Einsatzmengen zur Herstellung von Polyether-Polyurethanweichschaumstoffen**

| Komponente | Funktion | Beschreibung | Massenteile |
|---|---|---|---|
| A | Polyol | Arcol® 1105 (Covestro AG), Polyetherpolyol mit OHZ 56 mg KOH/g | 100 |
| B | Treibmittel | Wasser | 3,0 |
| C | Katalysator | Addocat 108® (LANXESS Deutschland GmbH), 70 %ige Lösung von Bis(2-dimethylaminoethyl)ether in Dipropylenglykol | 0,08 |
| D | Katalysator | Addocat® SO (LANXESS Deutschland GmbH), Zinn-II-2-ethylhexanoat | 0,16 |
| E | Stabilisator | Tegostab® B 8232 (Evonik), Siliconstabilisator | 1,0 |
| F1 | Flammschutzmittel | Mischung V4 | siehe Tabelle 4 |

(fortgesetzt)

| Komponente | Funktion | Beschreibung | Massenteile |
|---|---|---|---|
| F2 | Flammschutzmittel | Mischung V6 | siehe Tabelle 4 |
| F3 | Flammschutzmittel | Erfindungsgemäße Flammschutzmittel-Zubereitungen B4 | siehe Tabelle 4 |
| G | Diisocyanat | Desmodur® T 80 (Covestro AG), Toluylendiisocyanat, Isomerenmischung | 40,9 |
| OHZ = Hydroxylzahl gemäß DIN 53240 | | | |

**Herstellung von Polyether-Polyurethanweichschaumstoffen**

Die Rohstoffe zur Herstellung von Polyether-Polyurethanweichschaumstoffen und ihre Einsatzmengen sind in Tabelle 3 angegeben. Die Einsatzmengen der Flammschutzmittel wurden systematisch variiert, siehe unten. Die Rohstoffe mit Ausnahme des Diisocyanats (Komponente G) wurden zu einer homogenen Mischung verrührt. Dann wurde das Diisocyanat zugefügt und kurz intensiv untergerührt. Nach einer Startzeit von 15 - 20 s und einer Steigzeit von 170 - 200 s wurde ein Polyether-Polyurethanweichschaumstoff mit einem Raumgewicht von 33 $kg/m^3$ erhalten. Bei allen Versuchen wurden gleichmäßig feinporige Schaumstoffe erhalten.

**Bestimmung der Flammwidrigkeit**

Die Polyurethanweichschaumstoffe (Polyether und Polyester) wurden nach den Vorgaben des Federal Motor Vehicle Safety Standards FMVSS-302 getestet und den Brandklassen SE (selbsterlöschend), SE/NBR (selbsterlöschend/keine Brennrate), SE/BR (selbsterlöschend/mit Brennrate), BR (Brennrate) und RB (schnell brennend) zugeordnet. Die Brandversuche wurden für jede Rezeptur fünfmal durchgeführt.

In Abwesenheit eines Flammschutzmittels brennt der Polyurethanweichschaumstoff rasch ab (Brandklasse RB). Um die Wirksamkeit der Flammschutzmittel zu bestimmen, wurden Rezepturen mit steigenden Mengen an Flammschutzmittel (Massenteile pro 100 Teile Polyolkomponente, php) hergestellt und geprüft. Dann wurde die niedrigste Menge an Flammschutzmittel ermittelt, die in allen Wiederholungen die beste Brandklasse SE ermöglichte. Je geringer diese Menge ist, desto wirksamer ist das Flammschutzmittel. Die Ergebnisse sind in Tabelle 4 aufgelistet.

**Bestimmung der Emissionen**

Die Polyurethanweichschaumstoffe (Polyether und Polyester) wurden nach den Vorgaben des Prüfverfahrens VDA 278 auf Freisetzung von flüchtigen Bestandteilen getestet. Zur Bestimmung der Emissionen der Klasse VOC wird die Schaumstoffprobe für 30 min bei 90°C getempert. Die Bestimmung der Emissionen der Klasse FOG erfordert die Temperung der gleichen Schaumstoffprobe für weitere 60 min bei 120 °C. Die Ergebnisse sind in Tabelle 4 aufgelistet. Es wurden jeweils die Schaumstoffproben untersucht, die die in Tabelle 4 angegebenen Mengen Flammschutzmittel enthielten.

**Bestimmung des Fogging-Kondensats**

Das Foggingverhalten der Polyurethanweichschaumstoffe wurde gemäß DIN 75201 B untersucht. Die gemessenen Mengen an Fogging-Kondensat nach Lagerung von 16 h bei 100°C sind in Tabelle 4 wiedergegeben. Es wurden jeweils die Schaumstoffproben untersucht, die die in Tabelle 4 angegebenen Mengen Flammschutzmittel enthielten.

**Tabelle 4: Wirksamkeit, Emissionen und Fogging-Kondensat der Polyether-Polyurethanweichschaumstoffe.**

| Beispiel | Flammschutzmittel | Wirksamkeit (Mindestmenge für Brandklasse SE in php) | VOC nach VDA 278 (ppm) | FOG nach VDA 278 (ppm) | Fogging-Kondensat (mg) |
|---|---|---|---|---|---|
| V4 | Mischung S4 gemäß EP-A 3388479 | 6 | 23 | 157 | 0,38 |

(fortgesetzt)

| Beispiel | Flammschutzmittel | Wirksamkeit (Mindestmenge für Brandklasse SE in php) | VOC nach VDA 278 (ppm) | FOG nach VDA 278 (ppm) | Fogging-Kondensat (mg) |
|---|---|---|---|---|---|
| V6 | Mischung S6 gemäß EP-A 2 687 534 | 4 | 94 | 260 | 0,39 |
| B4 | Erfindungsgemäße Flammschutzmittel-Zubereitung B4 | 5 | 18 | 206 | 0,33 |

**Auswertung der Ergebnisse zu Polyether-Polyurethanweichschaumstoffen**

Die Mischung S4 gemäß EP-A 3388479 alleine (Vergleichsbeispiel V4) zeigt in den Polyether-Schaumstoffen die geringste Wirksamkeit, aber niedrige Emissions- und Foggingwerte. Die aus EP-A 2 687 534 bekannte Mischung S6 (Vergleichsbeispiel V6) ist besser wirksam, verursacht aber trotz niedrigerer Einsatzmenge deutlich höhere Emissionen im VDA-278-Test. Die erfindungsgemäße Flammschutzmittel-Zubereitung B4 ist besser wirksam als die in ihr enthaltene Mischung S4 alleine und zeigt niedrige Emissionen und weniger Fogging-Kondensat und weist somit das beste Eigenschaftsprofil auf.

**Tabelle 5: Rohstoffe und Einsatzmengen zur Herstellung von Polyester-Polyurethanweichschaumstoffen**

| Komponente | Funktion | Beschreibung | Massenteile |
|---|---|---|---|
| A | Polyol | Desmophen® 2200 B (Covestro AG), Polyesterpolyol mit OHZ 60 mg KOH/g | 100 |
| B | Treibmittel | Wasser | 4,0 |
| C | Katalysator | Niax® A-30 (Momentive), Bis-(dimethylaminoethyl)-ether | 0,25 |
| D | Katalysator | Addocat® 117 (LANXESS Deutschland GmbH), Tertiäres Amin | 0,25 |
| E | Stabilisator | Tegostab® B 8324 (Evonik), Siliconstabilisator | 1,0 |
| F1 | Flammschutzmittel | Fyrol® PNX | siehe Tabelle 6 |
| F2 | Flammschutzmittel | Flammschutzmittel-Zubereitung V9 | siehe Tabelle 6 |
| F3 | Flammschutzmittel | Mischung V4 | siehe Tabelle 6 |
| F5 | Flammschutzmittel | Erfindungsgemäße Flammschutzmittel-Zubereitungen B4 | siehe Tabelle 6 |
| G | Diisocyanat | Desmodur® T 80 (Covestro AG), Toluylendiisocyanat, Isomerenmischung | 24,1 |
| H | Diisocyanat | Desmodur® T 65 (Covestro AG), Toluylendiisocyanat, Isomerenmischung | 24,1 |
| OHZ = Hydroxylzahl gemäß DIN 53240 | | | |

**Herstellung von Polyester-Polyurethanweichschaumstoffen**

Die Rohstoffe zur Herstellung von Polyester-Polyurethanweichschaumstoffen und ihre Einsatzmengen sind in Tabelle 5 angegeben. Die Einsatzmengen der Flammschutzmittel wurden systematisch variiert, siehe oben. Die Rohstoffe mit Ausnahme der beiden Diisocyanate (Komponenten G und H) wurden zu einer homogenen Mischung verrührt. Dann wurden die beiden vorgemischten Diisocyanate zugefügt und kurz intensiv untergerührt. Nach einer Startzeit von 10 - 15 s und einer Steigzeit von 70 - 80 s wurde ein Polyester-Polyurethanweichschaumstoff mit einem Raumgewicht von 29 $kg/m^3$ erhalten. Die Schaumstruktur der Polyester-Polyurethanweichschaumstoffe hing von den verwendeten

Flammschutzmitteln ab. Sie ist in Tabelle 6 als "gleichmäßig feinporig" ("gf") oder "ungleichmäßig grobporig" ("ug") protokolliert. Ein Vergleichsschaumstoff ohne Flammschutzmittel hatte eine gleichmäßig feinporige Schaumstruktur und brannte rasch ab (Brandklasse RB).

**Tabelle 6: Schaumstruktur und Wirksamkeit der Polyester-Polyurethanweichschaumstoffe.**

| Beispiel | Flammschutzmittel | Schaumstruktur | Wirksamkeit (Mindestmenge für Brandklasse BR in php) | Wirksamkeit (Mindestmenge für Brandklasse SE in php) |
|---|---|---|---|---|
| V4 | Mischung S4 gemäß EP-A 3388479 | gf | 5 | 7 |
| B4 | Erfindungsgemäße Flammschutzmittel-Zubereitung B4 | gf | 4 | 7 |
| V7 | Fyrol® PNX | ug | - | - |
| V9 | Flammschutzmittel-Zubereitung V9 | ug | - | - |

**Auswertung der Ergebnisse zu Polyester-Polyurethanweichschaumstoffen**

Die Vergleichsbeispiele V7 und V9 zeigen, dass Flammschutzmittel auf Basis von Fyrol® PNX für die Herstellung von flammwidrigen Polyester-Polyurethanschaumstoffen nicht geeignet sind. Die hergestellten Schaumstoffe hatten eine ungleichmäßig grobporige Schaumstruktur und waren unbrauchbar.

Mit der Mischung S4 gemäß EP-A 3388479 (Vergleichsbeispiel V4) lässt sich hingegen die gewünschte gleichmäßig feinporige Schaumstruktur herstellen. Allerdings ist die Flammschutzwirksamkeit schlechter als bei der Mischung S6 gemäß EP-A 2 687 534 (Vergleichsbeispiel V6). Die erfindungsgemäße Flammschutzmittel-Zubereitung B4 ist ebenfalls gut mit dem Polyester-Polyol verträglich und weist eine leicht verbesserte Wirksamkeit gegenüber der Mischung S4 auf.

## Patentansprüche

1. Zubereitung **dadurch gekennzeichnet, dass** sie

i) eine Mischung, enthaltend Poly(alkylenphosphate) entsprechend der Formel (I)

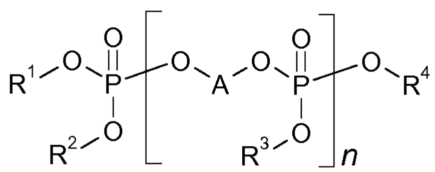

(I),

worin
$R^1$, $R^2$, $R^3$ und $R^4$ unabhängig voneinander jeweils für einen n-Butylrest oder einen 2-Methylpropylrest stehen,
A für einen Rest der Formel $-CHR^5-CHR^6-(O-CHR^7-CHR^8)_a-$ steht, worin
a für eine ganze Zahl von 1 bis 5 steht und
$R^5$, $R^6$, $R^7$ und $R^8$ unabhängig voneinander für Wasserstoff oder Methyl stehen,
und
$n$ für eine ganze Zahl von 0 bis 100, bevorzugt von 0 bis 50 und besonders bevorzugt von 0 bis 30 steht,
mit der Maßgabe, dass sich die in der Mischung enthaltenen Poly(alkylenphosphate) der Formel (I) zumindest in der Anzahl $n$ der Repetiereinheiten voneinander unterscheiden, und
der gewichtete Mittelwert der Anzahl der Repetiereinheiten $\bar{n}$ der Poly-(alkylenphosphate) der Formel (I) 1,10 bis 4,00 beträgt,

und
ii) mindestens einen cyclischen Phosphonsäureester der Formel (II)

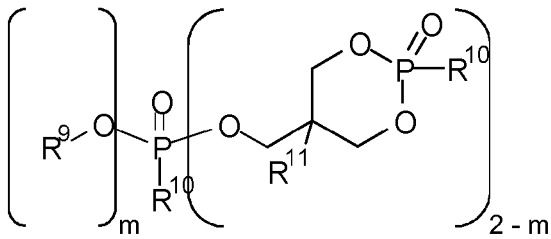

(II)

worin

$R^9$, $R^{10}$ und $R^{11}$ unabhängig voneinander jeweils für einen geradkettigen oder verzweigten $C_1$- bis $C_4$-Alkylrest stehen und
m für die Zahl 0 oder 1 steht,

enthält.

2. Zubereitungen gemäß Anspruch 1, **dadurch gekennzeichnet, dass** a für die Zahl 1 steht.

3. Zubereitungen gemäß Ansprüchen 1 und 2, **dadurch gekennzeichnet, dass** $R^5$, $R^6$, $R^7$ und $R^8$ alle gleich sind und für Wasserstoff stehen.

4. Zubereitungen gemäß einem der Ansprüche 1 bis 3, **dadurch gekennzeichnet, dass** $R^1$, $R^2$, $R^3$ und $R^4$ alle gleich sind und für n-Butylreste stehen.

5. Zubereitungen gemäß einem der Ansprüche 1 bis 3, **dadurch gekennzeichnet, dass** $R^1$, $R^2$, $R^3$ und $R^4$ alle gleich sind und für 2-Methylpropylreste stehen.

6. Zubereitungen gemäß einem der Ansprüche 1 bis 5, **dadurch gekennzeichnet, dass** der gewichtete Mittelwert der Anzahl der Repetiereinheiten $\bar{n}$ der Poly-(alkylenphosphate) der Formel (I) im Bereich von 1,20 bis 3,00, besonders bevorzugt im Bereich von 1,30 bis 2,60 und ganz besonders bevorzugt im Bereich von 1,30 bis 1,90 liegt.

7. Zubereitungen gemäß einem der Ansprüche 1 bis 6, **dadurch gekennzeichnet, dass** der Flächenanteil der dimeren Phosphorsäureesters der Formel (I) mit $n$ = 1 in der Molmassenverteilung von 10 bis 70 Flächenprozent aufweist, bestimmt durch Gelpermeationschromatographie mit Tetrahydrofuran als Elutionsmittel gegen Polystyrolstandards.

8. Zubereitungen gemäß einem der Ansprüche 1 bis 6, **dadurch gekennzeichnet, dass** $R^9$, $R^{10}$ und $R^{11}$ unabhängig voneinander für Methyl oder Ethyl stehen.

9. Zubereitungen gemäß einem der Ansprüche 1 bis 8, **dadurch gekennzeichnet, dass** $R^9$ und $R^{10}$ beide für Methyl stehen und $R^{11}$ für Ethyl steht.

10. Zubereitungen gemäß einem der Ansprüche 1 bis 9, **dadurch gekennzeichnet, dass** sie mindestens einen cyclischen Phosphonsäureester der Formel (II) mit m = 0 und mindestens einen cyclischen Phosphonsäureester der Formel (II) mit m = 1 enthalten.

11. Zubereitungen gemäß einem der Ansprüche 1 bis 10, **dadurch gekennzeichnet, dass** sie 60 bis 99,9 Gew.-% der Mischung enthaltend Poly(alkylenphosphate) der Formel (I) und 0,1 bis 40 Gew.-% an mindestens einem cyclischen Phosphonsäureester der Formel (II), bezogen auf die gesamte Zubereitung, enthalten.

12. Zubereitungen gemäß Anspruch 11, **dadurch gekennzeichnet, dass** sie 70 bis 99 Gew.-% der Mischung enthaltend Poly(alkylenphosphate) der Formel (I) und 1 bis 30 Gew.-% an mindestens einem cyclischen Phosphonsäureester der Formel (II), bezogen auf die gesamte Zubereitung, enthalten.

13. Zubereitung gemäß einem der Ansprüche 1 bis 12, **dadurch gekennzeichnet, dass** es sich um Flüssigkeiten mit

einer dynamischen Viskosität von 20 bis 1000 mPa·s bei 23 °C handelt.

**14.** Zubereitung gemäß einem der Ansprüche 1 bis 8, **dadurch gekennzeichnet, dass** sie ein oder mehrere Hilfsmittel ausgewählt aus der Gruppe der Lösungsmittel, Antioxidantien, Stabilisatoren und Farbstoffen enthält.

**15.** Zubereitungen gemäß einem der Ansprüche 1 bis 14, **dadurch gekennzeichnet, dass** sie neben der Mischung enthaltend Poly(alkylenphosphate) entsprechend der Formel (I) und dem mindestens einen cyclischen Phosphonsäureester der Formel (II) ein oder mehrere von den Poly(alkylenphosphaten) der Formel (I) und den cyclischen Phosphonsäureestern der Formel (II), verschiedene Flammschutzmittel und gegebenenfalls ein oder mehrere Hilfsmittel enthält.

**16.** Verwendung von Zubereitungen gemäß einem der Ansprüche 1 bis 15 als Flammschutzmittel.

**17.** Verwendung gemäß Anspruch 16, **dadurch gekennzeichnet, dass** die Zubereitungen als Flammschutzmittel für Polyurethane eingesetzt werden.

**18.** Verwendung gemäß Anspruch 17, **dadurch gekennzeichnet, dass** es sich bei den Polyurethanen um Schaumstoffe handelt, vorzugsweise um Polyurethanweichschaumstoffe basierend auf Polyether-Polyolen oder Polyester-Polyolen handelt.

**19.** Polyurethane enthaltend eine Zubereitung nach einem der Ansprüche 1 bis 15.

**20.** Polyurethane gemäß Anspruch 19 **dadurch gekennzeichnet, dass** es sich dabei um Polyurethanschaumstoffe handelt.

**21.** Polyurethanschaumstoffe gemäß Anspruch 19, **dadurch gekennzeichnet, dass** es sich dabei um Polyurethanweichschaumstoffe handelt, die aus Polyether-Polyolen oder Polyester-Polyolen hergestellt wurden.

**22.** Verfahren zur Herstellung von Polyurethanen gemäß Anspruch 19, **dadurch gekennzeichnet, dass** organische Polyisocyanate mit Verbindungen mit mindestens 2 gegenüber Isocyanaten reaktionsfähigen Wasserstoffatomen in Gegenwart von einer Zusammensetzung gemäß einem der Ansprüche 1 bis 14 und in Gegenwart von üblichen Treibmitteln, Stabilisatoren, Aktivatoren und/oder weiteren üblichen Hilfs- und Zusatzstoffen bei 20 bis 80 °C umgesetzt werden.

**23.** Verwendung der Polyurethane gemäß Anspruch 19 in Möbelpolsterungen, Textileinlagen, Matratzen, Fahrzeugsitzen, Armlehnen, Bauelementen, Sitz-oder Armaturverkleidungen, Dachhimmeln, Kabelummantelungen, Dichtungen, Beschichtungen, Lacken, Klebstoffen, Haftvermittlern oder Fasern.

## Claims

**1.** Preparation, **characterized in that** it contains

i) a mixture containing poly(alkylene phosphates) of formula (I)

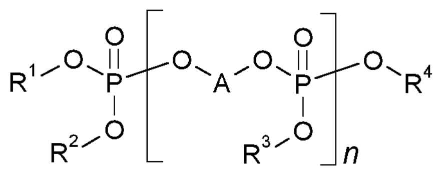

(I),

in which
$R^1$, $R^2$, $R^3$ and $R^4$ each independently of one another represent an n-butyl radical or a 2-methylpropyl radical,
A represents a radical of formula $-CHR^5-CHR^6-(O-CHR^7-CHR^8)_a-$,
in which

a represents an integer from 1 to 5 and
$R^5$, $R^6$, $R^7$ and $R^8$ independently of one another represent hydrogen or methyl,
and
*n* represents an integer from 0 to 100, preferably from 0 to 50 and particularly preferably from 0 to 30,
with the proviso that the poly(alkylene phosphates) of formula (I) present in the mixture differ from one another at least in the number *n* of repeating units and
the weighted average of the number of repeating units $\bar{n}$ of the poly(alkylene phosphates) of formula (I) is 1.10 to 4.00,
and
ii) at least one cyclic phosphonic ester of formula (II)

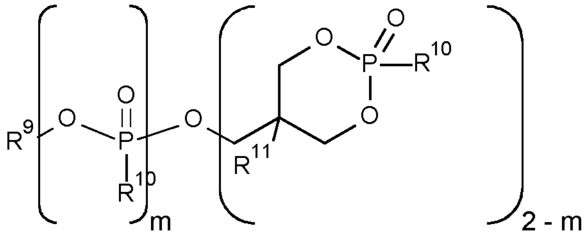

(II)

in which
$R^9$, $R^{10}$ and $R^{11}$ each independently of one another represent a straight-chain or branched $C_1$- to $C_4$-alkyl radical and
m represents the number 0 or 1.

2. Preparations according to Claim 1, **characterized in that** a represents the number 1.

3. Preparations according to Claims 1 and 2, **characterized in that** $R^5$, $R^6$, $R^7$ and $R^8$ are all identical and represent hydrogen.

4. Preparations according to any of Claims 1 to 3, **characterized in that** $R^1$, $R^2$, $R^3$ and $R^4$ are all identical and represent n-butyl radicals.

5. Preparations according to any of Claims 1 to 3, **characterized in that** $R^1$, $R^2$, $R^3$ and $R^4$ are all identical and represent 2-methylpropyl radicals.

6. Preparations according to any of Claims 1 to 5, **characterized in that** the weighted average of the number of repeating units $\bar{n}$ of the poly(alkylene phosphates) of formula (I) is in the range from 1.20 to 3.00, particularly preferably in the range from 1.30 to 2.60 and very particularly preferably in the range from 1.30 to 1.90.

7. Preparations according to any of Claims 1 to 6, **characterized in that** the area fraction of the dimeric phosphoric ester of formula (I) where *n* = 1 in the molar mass distribution is 10 to 70 area per cent determined by gel permeation chromatography against polystyrene standards with tetrahydrofuran as the eluent.

8. Preparations according to any of Claims 1 to 6, **characterized in that** $R^9$, $R^{10}$ and $R^{11}$ independently of one another represent methyl or ethyl.

9. Preparations according to any of Claims 1 to 8, **characterized in that** $R^9$ and $R^{10}$ both represent methyl and $R^{11}$ represents ethyl.

10. Preparations according to any of Claims 1 to 9, **characterized in that** they contain at least one cyclic phosphonic ester of formula (II) where m = 0 and at least one cyclic phosphonic ester of formula (II) where m = 1.

11. Preparations according to any of Claims 1 to 10, **characterized in that** they contain 60% to 99.9% by weight of the mixture containing poly(alkylene phosphates) of formula (I) and 0.1% to 40% by weight of at least one cyclic phosphonic ester of formula (II) based on the total preparation.

**12.** Preparations according to Claim 11, **characterized in that** they contain 70% to 99% by weight of the mixture containing poly(alkylene phosphates) of formula (I) and 1% to 30% by weight of at least one cyclic phosphonic ester of formula (II) based on the total preparation.

**13.** Preparation according to any of Claims 1 to 12, **characterized in that** liquids having a dynamic viscosity of 20 to 1000 mPa·s at 23°C are concerned.

**14.** Preparation according to any of Claims 1 to 8, **characterized in that** it contains one or more auxiliaries selected from the group of solvents, antioxidants, stabilizers and dyes.

**15.** Preparations according to any of Claims 1 to 14, **characterized in that** they contain not only the mixture containing poly(alkylene phosphates) of formula (I) and the at least one cyclic phosphonic ester of formula (II) but also one or more flame retardants distinct from the poly(alkylene phosphates) of formula (I) and the cyclic phosphonic esters of formula (II) and optionally one or more auxiliaries.

**16.** Use of preparations according to any of Claims 1 to 15 as flame retardants.

**17.** Use according to Claim 16, **characterized in that** the preparations are employed as flame retardants for polyurethanes.

**18.** Use according to Claim 17, **characterized in that** the polyurethanes are foams, preferably flexible polyurethane foams based on polyether polyols or polyester polyols.

**19.** Polyurethanes containing a preparation according to any of Claims 1 to 15.

**20.** Polyurethanes according to Claim 19, **characterized in that** they are polyurethane foams.

**21.** Polyurethane foams according to Claim 19, **characterized in that** they are flexible polyurethane foams produced from polyether polyols or polyester polyols.

**22.** Process for producing polyurethanes according to Claim 19, **characterized in that** organic polyisocyanates are reacted with compounds having at least 2 isocyanate-reactive hydrogen atoms in the presence of a composition according to any of Claims 1 to 14 and in the presence of customary blowing agents, stabilizers, activators and/or further customary auxiliary and additive substances at 20°C to 80°C.

**23.** Use of the polyurethanes according to Claim 19 in furniture cushioning, textile inserts, mattresses, vehicle seats, armrests, components, seat or dashboard trim, roof liners, cable sheathing, seals, coatings, paints, adhesives, adhesion promoters or fibres.

**Revendications**

**1.** Préparation, **caractérisée en ce qu'**elle contient

i) un mélange contenant des poly(phosphates d'alkylène) selon la formule (I)

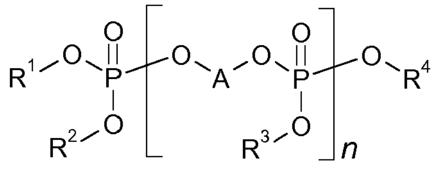

(I),

dans laquelle

$R^1$, $R^2$, $R^3$ et $R^4$ représentent, à chaque fois indépendamment les uns des autres, un radical n-butyle ou un radical 2-méthylpropyle,

A représente un radical de formule $-CHR^5-CHR^6-(O-CHR^7-CHR^8)_a-$, dans laquelle
a représente un nombre entier de 1 à 5 et
$R^5$, $R^6$, $R^7$ et $R^8$ représentent, indépendamment les uns des autres, hydrogène ou méthyle et
*n* représente un nombre entier de 0 à 100, de préférence de 0 à 50 et de manière particulièrement préférée de 0 à 30,

étant entendu que les poly(phosphates d'alkylène) de formule (I) contenus dans le mélange se distinguent les uns des autres au moins par le nombre *n* de motifs récurrents et la valeur moyenne pondérée $\bar{n}$ du nombre de motifs récurrents des poly(phosphates d'alkylène) de formule (I) valant 1,10 à 4,00 et
ii) au moins un ester cyclique d'acide phosphonique de formule (II)

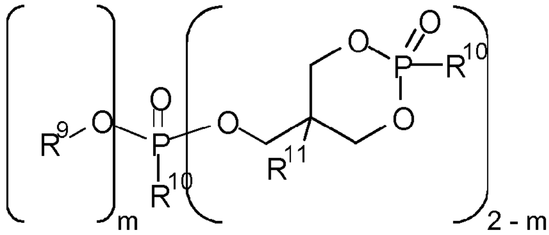
(II)

dans laquelle

$R^9$, $R^{10}$ et $R^{11}$ représentent, à chaque fois indépendamment les uns des autres, un radical $C_1$-$C_4$-alkyle linéaire ou ramifié et
m représente le nombre 0 ou 1.

**2.** Préparations selon la revendication 1, **caractérisées en ce que** a représente le nombre 1.

**3.** Préparations selon les revendications 1 et 2, **caractérisées en ce que** $R^5$, $R^6$, $R^7$ et $R^8$ sont tous identiques et représentent hydrogène.

**4.** Préparations selon l'une quelconque des revendications 1 à 3, **caractérisées en ce que** $R^1$, $R^2$, $R^3$ et $R^4$ sont tous identiques et représentent des radicaux n-butyle.

**5.** Préparations selon l'une quelconque des revendications 1 à 3, **caractérisées en ce que** $R^1$, $R^2$, $R^3$ et $R^4$ sont tous identiques et représentent des radicaux méthylpropyle.

**6.** Préparations selon l'une quelconque des revendications 1 à 5, **caractérisées en ce que** la valeur moyenne pondérée du nombre de motifs récurrents $\bar{n}$ des poly(phosphates d'alkylène) de formule (I) se situe dans la plage de 1,20 à 3,00, de manière particulièrement préférée dans la plage de 1,30 à 2,60 et de manière tout particulièrement préférée 1,30 à 1,90.

**7.** Préparations selon l'une quelconque des revendications 1 à 6, **caractérisées en ce que** la proportion surfacique de l'ester dimère de l'acide phosphorique de formule (I) dans laquelle n = 1 dans la distribution des masses molaires représente 10 à 70% en surface, déterminée par chromatographie par perméation de gel avec du tétrahydrofuranne comme éluant par rapport à un standard de polystyrène.

**8.** Préparations selon l'une quelconque des revendications 1 à 6, **caractérisées en ce que** $R^9$, $R^{10}$ et $R^{11}$ représentent, indépendamment les uns des autres, méthyle ou éthyle.

**9.** Préparations selon l'une quelconque des revendications 1 à 8, **caractérisées en ce que** $R^9$ et $R^{10}$ représentent tous deux méthyle et $R^{11}$ représente éthyle.

**10.** Préparations selon l'une quelconque des revendications 1 à 9, **caractérisées en ce qu'**elles contiennent au moins un ester cyclique d'acide phosphonique de formule (II) dans laquelle m = 0 et au moins un ester cyclique d'acide phosphonique de formule (II) dans laquelle m = 1.

**11.** Préparations selon l'une quelconque des revendications 1 à 10, **caractérisées en ce qu'**elles contiennent 60 à

99,9% en poids du mélange contenant des poly(phosphates d'alkylène) de formule (I) et 0,1 à 40% en poids d'au moins un ester cyclique d'acide phosphonique de formule (II), par rapport à la totalité de la préparation.

**12.** Préparations selon la revendication 11, **caractérisées en ce qu'**elles contiennent 70 à 99% en poids du mélange contenant des poly(phosphates d'alkylène) de formule (I) et 1 à 30% en poids d'au moins un ester cyclique d'acide phosphonique de formule (II), par rapport à la totalité de la préparation.

**13.** Préparation selon l'une quelconque des revendications 1 à 12, **caractérisée en ce qu'**il s'agit de liquides présentant une viscosité dynamique de 20 à 1000 mPa.s à 23°C.

**14.** Préparation selon l'une quelconque des revendications 1 à 8, **caractérisée en ce qu'**elle contient un ou plusieurs adjuvants choisis dans le groupe des solvants, des antioxydants, des stabilisants et des colorants.

**15.** Préparations selon l'une quelconque des revendications 1 à 14, **caractérisées en ce qu'**elles contiennent, outre le mélange contenant des poly(phosphates d'alkylène) selon la formule (I) et ledit au moins un ester cyclique d'acide phosphonique de formule (II), un ou plusieurs agents ignifuges différents des poly(phosphates d'alkylène) de formule (I) et des esters cycliques d'acide phosphonique de formule (II) et le cas échéant un ou plusieurs adjuvants.

**16.** Utilisation de préparations selon l'une quelconque des revendications 1 à 15 comme agent ignifuge.

**17.** Utilisation selon la revendication 16, **caractérisée en ce que** les préparations sont utilisées comme agents ignifuges pour des polyuréthanes.

**18.** Utilisation selon la revendication 17, **caractérisée en ce qu'**il s'agit, pour les polyuréthanes, de mousses, de préférence de mousses souples de polyuréthane à base de polyéther-polyols ou de polyester-polyols.

**19.** Polyuréthanes contenant une préparation selon l'une quelconque des revendications 1 à 15.

**20.** Polyuréthanes selon la revendication 19, **caractérisés en ce qu'**il s'agit de mousses de polyuréthane.

**21.** Mousses de polyuréthane selon la revendication 19, **caractérisées en ce qu'**il s'agit de mousses souples de polyuréthane, qui ont été préparées à partir de polyéther-polyols ou de polyester-polyols.

**22.** Procédé pour la préparation de polyuréthanes selon la revendication 19, **caractérisé en ce que** des polyisocyanates organiques sont transformés avec des composés comprenant au moins 2 atomes d'hydrogène réactif vis-à-vis des isocyanates en présence d'une composition selon au moins l'une quelconque des revendications 1 à 14 et en présence d'agents gonflants, de stabilisants, d'activateurs usuels et/ou d'autres adjuvants et additifs usuels, à 20 jusqu'à 80°C.

**23.** Utilisation des polyuréthanes selon la revendication 19 dans des rembourrages de meubles, des garnitures textiles, des matelas, des sièges de véhicule, des accoudoirs, des éléments de construction, des revêtements de sièges ou d'armatures, des ciels de toit, des gaines de câbles, des joints, des revêtements, des vernis, des adhésifs, des promoteurs d'adhérence ou des fibres.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2002079315 A1
- EP 2687534 A1
- EP 3388479 A
- US 7288577 B1
- EP 2848640 A1
- EP 2687534 A
- DE OS1694142 A
- DE OS1694215 A
- DE OS1720768 A
- DE OS2832253 A
- DE OS2732292 A
- US 2764565 A
- GB 1162517 A
- DE OS2153086 A


### In der Beschreibung aufgeführte Nicht-Patentliteratur


- *CHEMICAL ABSTRACTS,* 184538-58-7
- Polyurethane. Kunststoff-Handbuch. Carl-Hanser-Verlag, 1993, vol. VII
- Polyurethanes. **NORBERT ADAM ; GEZA AVAR ; HERBERT BLANKENHEIM ; WOLFGANG FRIEDERICHS ; MANFRED GIERSIG ; ECKEHARD WEIGAND ; MICHAEL HALFMANN ; FRIEDRICH-WILHELM WITTBECKER ; DONALD-RICHARD LARIMER ; UDO MAIER.** Ullmann's Encyclopedia of Industrial Chemistry Release 2005, Electronic Release. Wiley-VCH, 2005
- **W. SIEFKEN.** Justus Liebigs Annalen der Chemie. vol. 562, 75-136
- Kunststoff-Handbuch. Carl-Hanser-Verlag, 1993, vol. VII, 104-123
- Polyurethane. Kunststoff-Handbuch. Carl-Hanser-Verlag, 1993, vol. VII, 139-192